# EUROPEAN PATENT APPLICATION

(11) **EP 0 773 142 A1**
(43) Date of publication of application: **14.05.1997**
(21) Application number: 96307701.1
(22) Date of filing: 24.10.1996
(51) Int. Cl.: B60R 21/20, B60R 21/05

(54) **Crash-protection device**

(30) Priority: 11.11.1995 GB 9523133
(71) Applicant: UNITED TECHNOLOGIES AUTOMOTIVE CLIFFORD LIMITED, Birmingham, B11 3DN (GB)
(72) Inventor: Edge, Stanley John, Moseley, Birmingham, B13 9QE (GB)
(74) Representative: Pearce, Anthony Richmond

(57) **Abstract**

A crash-protection device for use in motor vehicles, comprising a hollow body (20) having a front opening (27) closed by an openable cover (28), an inflatable bag (36) mounted within the hollow body (20), and a gas generator (34) for inflating the bag under predetermined conditions to cause deployment of the bag through the front opening. Secondary crash protection or protection at speeds below which the bag is designed to be deployed, is provided for by a collapsible perforated metal shell (40), disposed internally within the inflatable bag (36), and through which gas from the generator can pass to cause the inflatable bag (36) to deploy in use.

## Description

This invention relates to a crash-protection device for a motor vehicle and is more particularly concerned with a crash-protection device incorporating an inflatable bag and an inflation mechanism for inflating the bag in the event of a crash of appropriate severity.

Inflatable bag crash-protection devices are generally not designed to be deployed when the motor vehicle is involved in a low speed crash, e.g below about 12 mph (5.36m/sec). Current inflatable bag crash-protection devices are not particularly effective at preventing damage to an occupant of the motor vehicle in the event of a crash at a speed below that at which the inflatable bag is deployed. Also, in the event of a crash in which the air bag is deployed and where there is a secondary impact or a very long duration impact, existing designs are not particularly effective at limiting damage after the inflatable bag has collapsed.

It is an object of the present invention to provide a crash-protection device incorporating an inflatable bag and which is of a design in which additional protection is provided for overcoming some of the above-mentioned disadvantages.

According to one aspect of the present invention a crash-protection device comprising a hollow body having a front opening closed by an openable cover, an inflatable bag mounted within the hollow body, and an inflator for inflating the bag under predetermined conditions to cause deployment of the bag through the front opening, wherein the hollow body contains an energy-absorbing element which is disposed within the inflatable bag and through which element gas from the inflator can pass to cause the inflatable bag to deploy in use.

Preferably the energy-absorbing element is perforated to allow the passage of gas therethrough.

Most preferably, the energy-absorbing element comprises a perforated, collapsible shell which is secured within the body. Conveniently the shell is a pressed metal shell. The shell preferably occupies a majority of the cross-sectional area of the interior of the hollow body. Preferably the shell also occupies the majority of the depth of the hollow body.

Most preferably, the energy-absorbing element is adjacent to but spaced from the underside of the cover such that the majority of the inflatable bag is disposed between the cover and the energy-absorbing element.

The present invention is applicable to crash-protection devices where the inflator comprises a gas generator (eg a pyrotechnic gas generator) provided within the hollow body and also to devices where the inflator comprises a generator (which may be a hybrid gas generator containing stored gas and a pyrotechnic material) which is disposed at least partially externally of the hollow body but in communication therewith.

The body of the crash-protection device may define at least the boss of a steering wheel.

According to another aspect of the present invention, there is provided a steering wheel assembly fitted with a crash-protection device according to said one aspect of the present invention.

The crash-protection device according to said one aspect of the pesent invention is also applicable for the protection of motor vehicle passengers as well as the driver, and may also be suitable for use on motor cycles.

Embodiments of the present invention will now be described, by way of example, with reference to the accompanying drawings, in which:-
Fig 1 is a schematic axial section through one example of crash-protection devices according to the present invention as incorporated in an automobile steering wheel, and
Fig 2 is a schematic axial section through another example of crash-protection device according to the present invention.

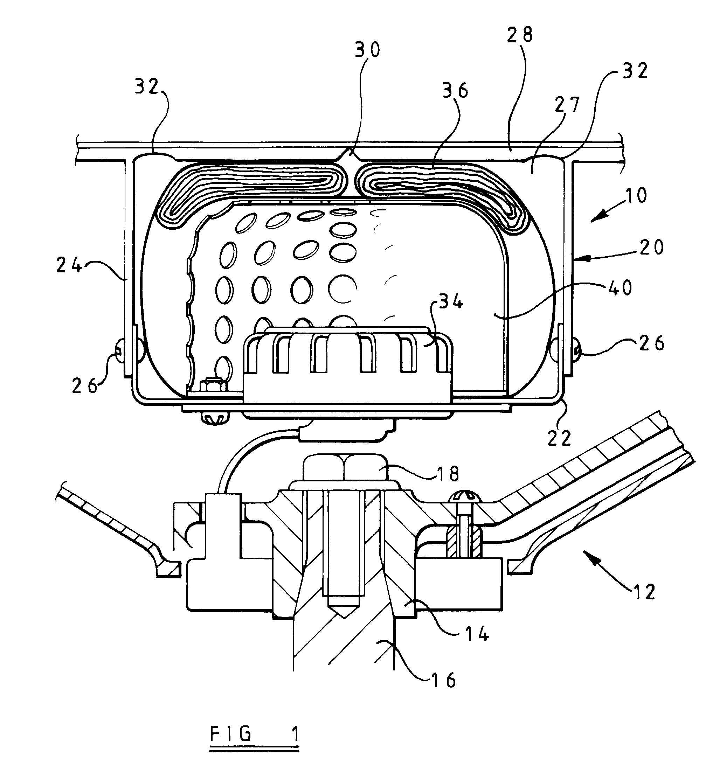

Referring now to Fig 1 of the drawings, the crash-protection device defines the central boss 10 of a steering wheel 12 which is only partly shown in Fig 1 and which includes a sleeve 14 secured to a steering column 16 of the vehicle by means of a mounting bolt 18.

The crash-protection device includes hollow body 20 which defines the boss 10 of the steering wheel. The hollow body 20 is formed of a pressed metal base 22 and a plastics moulding 24 which is riveted to the base 22 by rivets 26. The plastics moulding 24 includes a front opening 27 closed by a cover 28 which faces the driver of the vehicle in use and which is internally weakened by a central groove 30 so that tearing can occur along the line of the groove 30. At its outer sides, cover 28 is moulded integrally with the remainder of the plastics moulding and has integral hinge regions 32. Respective parts of the cover 28 can hinge about these hinge regions 32 when the cover 28 has torn along the line of groove 30 upon bag deployment.

The device further comprises an electrically actuated pyrotechnic gas generator 34 of per se known design in which gas-generating reagents and a detonator are disposed within a rigid capsule which is slotted to allow egress of the generated gases. The generator 34 is mounted in the base 22 and is arranged to discharge gas in use into the interior of an inflatable bag 36 mounted within the hollow body 20 and sealed with respect to the base 22 around the gas generator 34. The gas generator 34 is activated electrically via lead 38. Inflation of the bag 36 within the hollow body 20 causes the cover 28 to tear along the line of groove 30 so that the resultant parts of the cover 28 hinge about the respective hinge regions 32 to permit deployment of the bag 36 in a manner known per se through the front opening 27. After deployment, the bag 36 looses gas pressure and deflates.

In accordance with the present invention, the hollow body 20 also contains an energy-absorbing element in the form of a collapsible perforated metal shell 40 which is disposed internally of the bag 36 and which surrounds the gas generator 34. Although not shown in the drawings, the perforations are distributed over the whole of the surface area of the shell 30. These perforations are of a size and disposition such as to impart the desired collapse characteristics to the shell 40. The shell 40 occupies nearly the whole of the cross-sectional area of the hollow body and is formed with a smooth outline. The bag 36 is tightly folded within the hollow body 20 so that most of it lies between the cover 28 and the shell 40.

It will therefore be appreciated that, when the gas generator 34 has been activated, gas therefrom can pass readily through the perforations in the shell 40 to cause the bag 36 to inflate to provide the necessary protection under designated impact conditions. However, in the event of a crash which is of insufficient severity to cause the bag 36 to be deployed, the severity of the impact may nevertheless be sufficient to cause the head or body of the driver to impact against the cover 28. Without the presence of the energy-absorbing shell 40, the driver can suffer injuries as a result of impact against the gas generator 34 which is not designed for energy-absorbing purposes. Progressive collapsing of the shell 40 under these conditions serves to reduce the risk of damage to the driver.

In addition, in the event of a secondary impact taking place after the bag 36 has deployed and collapsed, the shell 40 acts in a similar way to reduce the risk of damage to the driver after the initial impact which has been successfully cushioned by the bag 36 before collapsing. The same protective effect occurs in the event that the duration of the primary impact is sufficiently long that the bag 36 has started to collapse before the vehicle has finally stopped.

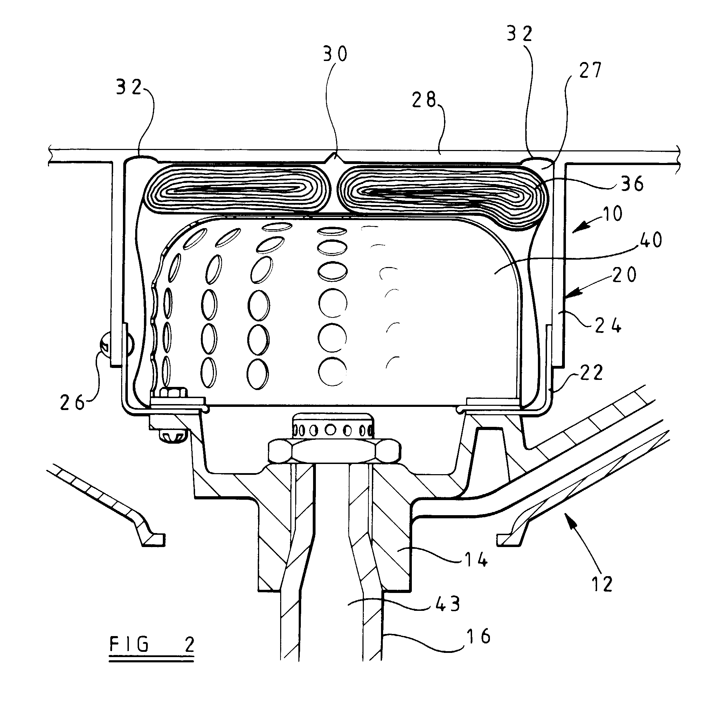

Referring now to Fig 2 of the drawings, the crash-protection device illustrated therein is very similar to that described with reference to Fig 1 and similar parts are accorded the same reference numerals. In this example, however, pyrotechnic gas generator 34 is replaced by a hybrid gas generator module 42 which is provided in the upper end of the steering column 16 and which includes stored gas and a pyrotechnic device which is electrically fired so as to cause gas to be ejected into the body 20, through the shell 40 and into the interior of the bag 36 to cause deployment thereof in the manner described above in realation to Fig.1.

The present invention is particularly, but not exclusively, applicable to bags 36 which are formed of lightweight closely-woven fabrics rather than heavier gauge coated fabrics which normally require venting holes to be incorporated.

## Claims

1. A crash-protection device comprising a hollow body (20) having a front opening (27) closed by an openable cover (28), an inflatable bag (36) mounted within the hollow body (20), and an inflator (34,42) for inflating the bag (36) under predetermined conditions to cause deployment of the bag (36) through the front opening (27), characterised in that the hollow body (20) contains an energy-absorbing element (40) which is disposed within the inflatable bag (36) and through which element (40), gas from the inflator (34,42) can pass to cause the inflatable bag (36) to deploy in use.

2. A crash-protection device as in claim 1, wherein the energy-absorbing element (40) is perforated to allow the passage of gas therethrough.

3. A crash-protection device as in claim 1 or claim 2, wherein the energy-absorbing element (40) comprises a collapsible shell which is secured within the body (20).

4. A crash-protection device as in claim 3, wherein the shell (40) is a pressed metal shell.

5. A crash-protection device as in any preceding claim, wherein the energy-absorbing element (40) occupies a majority of the cross-sectional area of the interior of the hollow body (20).

6. A crash-protection device as in any preceding claim, wherein the energy-absorbing element (40) occupies a majority of the depth of the hollow body (20).

7. A crash-protection device as in any preceding claim, wherein the majority of the inflatable bag (36) is disposed between the cover (28) and the energy-absorbing element (40).

8. A crash-protection device as in any preceding claim, wherein the inflator (34,42) comprises a gas generator.

9. A crash-protection device as in claim 8, wherein the inflator comprises a pyrotechnic gas generator (34) provided within the hollow body (20).

10. A crash-protection device as in any of claims 1 to 7, wherein the inflator (34,42) comprises a generator which is disposed at least partially externally of the hollow body but in communication therewith.

11. A crash-protection device as in claim 10, wherein the inflator comprises a hybrid gas generator (42) containing stored gas and a pyrotechnic material.

12. A crash-protection device as in any preceding claim, wherein the body of the crash-protection device (20) may define at least the boss of a steering wheel.

13. A steering wheel assembly fitted with a crash-protection device as claimed in any preceding claim.

14. A motor vehicle when fitted with at least one crash-protection device as in any of claims 1 to 12 or a steering wheel assembly as in claim 13.
